# DEMANDE DE BREVET EUROPEEN

(11) **EP 1 338 910 A1**
(43) Date de publication de la demande: **27.08.2003**
(21) Numéro de dépôt: 03290441.9
(22) Date de dépôt: 25.02.2003
(51) Int. Cl.: G02B 6/44

(54) **Cassette de lovage pour fibres optiques**

(30) Priorité: 25.02.2002 FR 0202728
(71) Demandeur: Nexans, 75008 Paris (FR)
(72) Inventeur: Biaud, Richard, 78260 Acheres (FR); Vincent, Alain, 77230 Juilly (FR)
(74) Mandataire: Lenne, Laurence

(57) **Abrégé**

La présente a pour objet une cassette (1) de lovage d'au moins une fibre optique (2) munie d'une protection d'épissure (3), dans laquelle la fibre optique (2) est destinée à être enroulée de manière à épouser une paroi périphérique intérieure (7) de ladite cassette (1), ladite cassette (1) étant munie de deux entrées (10) au voisinage de ladite paroi périphérique intérieure (7) pour faire pénétrer dans ladite cassette (1) deux portions (4, 5) de ladite fibre optique (2) situées de part et d'autre de ladite protection d'épissure (3). Selon l'invention, les entrées (10) sont munies de moyens de guidage (18) de sorte que lesdites deux portions (4, 5) s'enroulent dans le même sens et que ladite protection d'épissure (3) vient se placer à une position non prédéterminée de ladite cassette (1). Le présente invention est plus particulièrement adaptée au lovage d'un ruban plat de fibres optiques muni d'une épissure.

## Description

Le présente invention concerne une cassette de lovage d'au moins une fibre optique munie d'une protection d'épissure, plus particulièrement adaptée au lovage d'un ruban plat de fibres optiques muni d'une épissure.

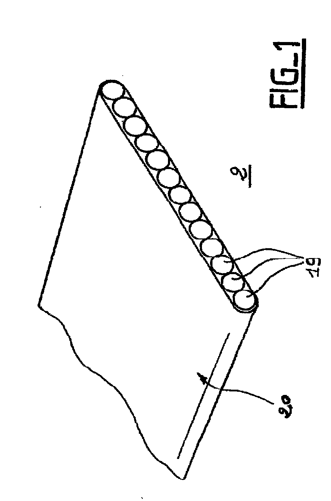

Un ruban de fibres optiques est formé d'un ensemble de fibres optiques qui sont disposées parallèlement les unes aux autres et noyées dans un revêtement externe commun, appelé matrice, par exemple une résine, le revêtement présentant un profil extérieur en méplat. Les rubans peuvent grouper un nombre de fibres pouvant aller de 4 à 24, chaque fibre comportant, de manière connue, un coeur en silice de diamètre inférieur à 10 microns, une gaine optique en silice autour de ce coeur avec un diamètre d'environ 125 microns et une gaine de protection en résine de diamètre environ égal à 250 microns. La figure 1 représente ainsi schématiquement la coupe d'un ruban 2 ayant une pluralité de fibres optiques 19, le ruban 2 étant revêtu d'une matrice 20.

Dans les réseaux de télécommunications à fibres optiques où de tels rubans sont utilisés, il est très souvent utile de pouvoir raccorder tout ou partie des fibres d'un ruban débarrassé de son revêtement avec tout ou partie des fibres d'un autre ruban également débarrassé de son revêtement. Ce raccordement se fait par une épissure. Cette épissure est réalisée après dénudage de la gaine des fibres individuelles et aboutement des fibres à raccorder, la liaison étant obtenue par des moyens mécaniques, des procédés de soudure ou de collage. Après le raccordement, l'épissure est recouverte d'une protection entraînant une surépaisseur importante par rapport au ruban.

De façon à faciliter le raccordement, il est important de disposer d'une surlongueur de ruban pour pouvoir amener l'extrémité du ruban vers l'outil de raccordement. Cette surlongueur permet une manipulation plus aisée des extrémités des deux rubans sans contraindre les rubans de façon excessive et notamment sans que les courbures respectives de chacun des rubans ne dépassent une limite prédéterminée au-delà de laquelle la flexion peut entraîner des pertes optiques par atténuation, un endommagement ou même une rupture du ruban. Une fois le raccordement effectué, la surlongueur de ruban comprenant l'épissure avec sa protection est placée à l'intérieur d'une cassette de rangement. Plusieurs types de cassettes de rangement ont déjà été divulgués.

Ainsi, le document FR2748576 décrit une cassette pour lover des rubans de fibres optiques munis d'une protection d'épissure utilisant un noyau cylindrique mobile autour du centre de la cassette. Le fait de faire tourner le noyau va permettre d'enrouler le ruban autour de ce noyau; les rubans reliés par une épissure rentrent chacun par une entrée différente de la cassette et la protection d'épissure est fixée dans une cavité ménagée dans l'épaisseur du noyau. Ce dispositif permet de maintenir le ruban contre le noyau et d'éviter que le ruban s'échappe de la cassette.

Toutefois sa mise en oeuvre pose certaines difficultés. Outre le fait qu'il s'agit d'un dispositif mécanique assez compliqué, il est nécessaire, pour son bon fonctionnement, que les rubans reliés par une épissure aient une même longueur par rapport à leurs points d'entrée respectifs dans le dispositif. Dans le cas contraire, il reste toujours une portion de ruban non rangée qui va entraîner des contraintes d'installation pour la personne intervenant au niveau du réseau de télécommunications.

Le document WO9427176 décrit une cassette pour lover des rubans de fibres optiques munis d'une protection d'épissure. Cette cassette utilise des moyens de guidage du ruban à l'intérieur de la cassette ; les rubans reliés par une épissure rentrent chacun par une entrée différente de la cassette et dans des directions opposées et la protection d'épissure est fixée par un dispositif de maintien. Le rangement du ruban se fait donc en suivant les moyens de guidage et en fixant la protection d'épissure.

Mais l'utilisation de ces moyens de guidage répartis sur la surface de la cassette impose une surface de rangement importante pour maintenir un rayon de courbure suffisant pour le ruban, surtout lorsque ce dernier a une grande longueur; en effet, le fait d'enrouler le ruban de l'extérieur de la cassette vers son intérieur via les moyens de guidage entraîne une diminution rapide du rayon de courbure du ruban lorsque ce dernier se rapproche du centre de la cassette.

En outre, la fixation de la protection d'épissure entraîne des contraintes d'installation importantes souvent liées à l'effet de ressort du ruban qui ne peut plus prendre sa position naturelle ; ces contraintes peuvent impliquer des torsions indésirables, des rayons de courbures non controlés du ruban induisant des pertes optiques par atténuation .

La présente invention vise à fournir une cassette de lovage d'au moins une fibre optique munie d'une protection d'épissure permettant de ranger une grande longueur de fibre sans augmenter la surface de la cassette, de s'affranchir des problèmes de contraintes d'installation et d'utiliser des fibres de longueurs différentes à partir de leurs points d'entrée.

La présente invention propose à cet effet une cassette de lovage d'au moins une fibre optique munie d'une protection d'épissure, dans laquelle ladite fibre optique est destinée à être enroulée de manière à épouser une paroi périphérique intérieure de ladite cassette, ladite cassette étant munie de deux entrées au voisinage de ladite paroi périphérique intérieure pour faire pénétrer dans ladite cassette deux portions de ladite fibre optique situées de part et d'autre de ladite protection d'épissure caractérisée en ce que lesdites entrées sont munies de moyens de guidage de sorte que lesdites deux portions s'enroulent dans le même sens et que ladite protection d'épissure vient se placer à une position non prédéterminée de ladite cassette.

Grâce à l'invention, après la réalisation de l'épissure, les deux portions de ruban sont lovées dans le même sens et en même temps depuis leurs points d'entrée respectifs dans la cassette et la fibre utilise sa force de rappel naturelle vers la paroi périphérique intérieure de la cassette pour venir se plaquer contre elle. Ainsi, le rayon de courbure de la fibre est essentiellement fixé par la surface de la paroi et varie peu pendant l'enroulement; ceci permet de ranger une grande longueur de fibre sans avoir à augmenter la surface de la cassette.

En outre, la fibre prend sa position naturelle dans la cassette et cette position n'est pas contrainte par une fixation de la protection d'épissure ; les contraintes d'installation sont alors très faibles.

De plus, rien n'empêche de ranger une fibre ayant deux portions situées de part et d'autre de la protection d'épissure de longueurs différentes par rapport à leurs points d'entrée respectifs.

De manière avantageuse, lesdites deux entrées sont confondues. La cassette est alors mécaniquement plus simple et plus facilement gérable si elle est placée dans un organiseur pour cassettes superposables.

Selon un mode de réalisation, la cassette est destinée à être montée dans un organiseur pour cassettes superposables et elle comporte alors un bras flexible de pivotement entre une position fermée et une position ouverte relativement au dit organiseur, ledit bras permettant l'acheminement de ladite fibre entre l'organiseur et ladite entrée de ladite cassette, le chemin en longueur de guidage de ladite fibre de l'une à l'autre desdites positions fermée et ouverte restant constant. Cette cassette permet d'éviter d'avoir à gérer une surlongueur à chaque ouverture/fermeture dans l'organiseur. Ce type d'organiseur permet d'adapter le nombre de cassettes en fonction des demandes des clients et des capacités des fibres.

Selon un mode de réalisation, la cassette destinée à contenir une fibre présentant une inversion de sens lui donnant la forme d'un S comporte des moyens de blocage de ladite fibre de manière à maintenir la forme en S. En effet, les portions situées de part et d'autre de l'épissure s'enroulant dans le même sens, une inversion du sens de la fibre va naturellement se former dans la cassette. Il est alors souhaitable de bloquer la partie de la fibre où l'inversion de sens se produit pour maintenir un rayon de courbure convenable pour la fibre.

Avantageusement, les moyens de blocage sont au centre de la cassette.

De manière avantageuse, la cassette comporte des moyens de maintien de la fibre, lesdits moyens de maintien étant disposés à proximité de ladite paroi périphérique intérieure de façon à limiter le mouvement en translation de ladite fibre parallèlement à la paroi périphérique intérieure. Ces moyens permettent ainsi de maintenir la fibre dans la cassette lorsque cette dernière est soumise à des vibrations dans son environnement de fonctionnement.

Selon un mode de réalisation, la paroi périphérique intérieure est de forme sensiblement circulaire. Cette forme va permettre à la fibre d'épouser parfaitement les contours de la paroi.

Avantageusement, lesdites deux portions de fibre ont des longueurs suffisamment différentes à partir de leurs points d'entrée dans la cassette pour que la protection d'épissure ne soit pas au centre de la cassette. Lorsque la paroi périphérique a une forme sensiblement circulaire, les deux portions de fibre ont alors une différence de longueur à partir de leurs points d'entrée au moins égale à πxD/2 où D désigne le diamètre de ladite paroi périphérique.

D'autres caractéristiques et avantages de la présente invention apparaîtront dans la description suivante d'un mode de réalisation donné à titre illustratif et nullement limitatif.

Dans les figures suivantes :
- La figure 1 représente une vue en coupe d'un ruban de fibres optiques,
- La figure 2 représente une cassette pour lover un ruban de fibres optiques selon l'invention avec un ruban lové à l'intérieur et un bras flexible en position fermée,
- La figure 3 représente la cassette de la figure 2 avec son bras flexible en position ouverte,
- La figure 4 représente un organiseur pour superposer des cassettes selon l'invention.

Dans toutes les figures, les éléments communs portent les mêmes numéros de référence.

La figure 1 a déjà été décrite en relation avec l'état de la technique.

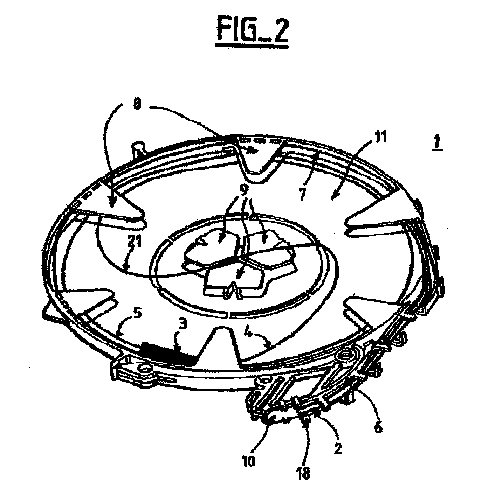

La figure 2 montre une cassette circulaire 1 selon l'invention dans laquelle est lové un ruban de fibres optiques 2 tel que celui représenté en figure 1 muni d'une protection d'épissure 3. La protection d'épissure 3 sépare la fibre 2 en deux portions 4 et 5 situées de part et d'autre de la protection 3.

La cassette 1 comporte un bras d'entrée flexible 6 avec un point d'entrée de ruban 10, une paroi périphérique intérieure 7 en forme de cercle de diamètre D sur laquelle sont fixées des languettes de maintien 8 et une surface de fond 11. Le bras d'entrée flexible 6 est muni de taquets de guidage 18. La cassette comprend également des éléments de blocage 9 situées en son centre.

Après réalisation de l'épissure et de sa protection 3, la personne chargée de l'intervention sur le réseau de télécommunications va lover les deux portions 5 et 4 en même temps depuis le point d'entrée 10 en enroulant les portions 4 et 5 dans le sens trigonométrique depuis l'extérieur vers l'intérieur du disque. L'insertion des portions 5 et 4 sur le bras 6 se fait par l'intermédiaire des taquets de guidage 18. La force de rappel du ruban 2 est alors suffisante pour plaquer les portions 5 et 4 sur la paroi périphérique intérieure 7. Les languettes de maintien 8 garantissent la tenue du ruban 2 à l'intérieur de la cassette 1, notamment lorsque cette dernière vibre dans certaines conditions de fonctionnement. Il est important de fixer le diamètre D de façon à avoir une marge de sécurité suffisante pour que le rayon de courbure du ruban 2 ne dépasse jamais sa limite autorisée liée à l'atténuation maximale autorisée sur les fibres optiques qui le constituent.

En continuant à enrouler le ruban, la protection d'épissure 3 est déposée à une position non prédéterminée sur la surface de fond 11 le long de la paroi 7. La portion 4 du ruban 2 effectue ensuite une inversion de sens en forme de S 21 et la partie en S 21 est bloquée dans cette position par les éléments de blocages 9. Les éléments de blocage 9 sont disposés de manière à bloquer la partie en S quelle que soit la position de la protection d'épissure 3 sur la surface de fond 11.

Si l'on souhaite que la protection d'épissure 3 reste le long de la paroi 7 et n'atteigne pas le centre de la surface 11, il faut choisir les deux portions 4 et 5 de longueur différente à partir du point d'entrée 10. Il peut en effet être souhaitable de ne pas soumettre la protection d'épissure à de trop fortes contraintes qui pourraient intervenir au centre de la cassette. En première approximation, cette différence de longueur doit être au moins égale à πxD/2. Le produit πxD/2 représente environ la longueur de la partie de la fibre 2 en forme de S.

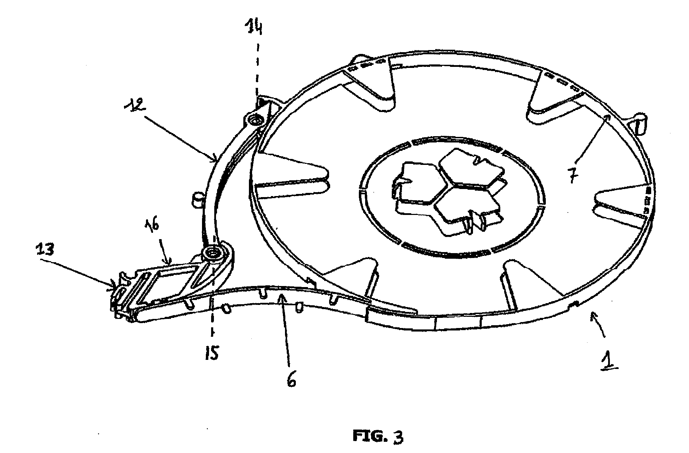

La figure 3 montre la cassette 1 sans le ruban 2 et avec son bras flexible 6 en position ouverte. Le bras 6 est relié d'un coté à la paroi périphérique 7 et de l'autre à une pièce 16 possédant des moyens d'encliquetage 13. La cassette 1 comporte également un bras rigide 12 relié d'une part à la paroi 7 et d'autre part au bras 6 par l'intermédiaire de la pièce 16. Le bras 12 est mobile autour d'un axe de rotation 14 situé au voisinage de la paroi 7, et mobile autour d'un axe de rotation 15 appartenant à la pièce 16.

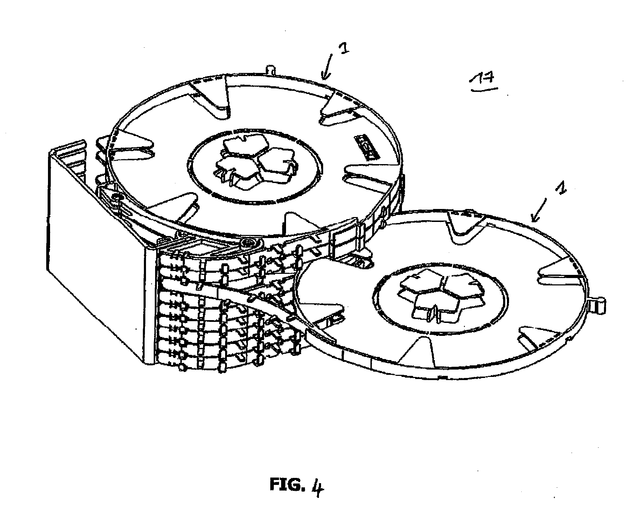

La figure 4 montre un organiseur 17 pour superposer des cassettes 1 selon l'invention. Les cassettes 1 peuvent être superposées et sont fixées à l'organiseur 17 via les moyens d'encliquetage 13 représentés en figure 3.

Le passage de la position fermée représentée en figure 2 à la position ouverte représentée en figure 3 de la cassette 1 se fait via un mouvement de translation et de rotation de la cassette 1. La rotation est induite par le mouvement du bras flexible 6 sur lequel la cassette 1 vient s'enrouler partiellement et la translation est induite par le mouvement du bras rigide 12 qui se déplie en tournant autour des axes 14 et 15. Grâce à ce mouvement, il n'y a jamais de surlongueur de ruban entre la position ouverte et la position fermée de la cassette 1. De plus, les rubans ne sont jamais contraints pendant les manipulations et les interventions sur les réseaux de télécommunications.

Bien entendu, l'invention n'est pas limitée au mode de réalisation qui vient d'être décrit.

Notamment, le mode de réalisation porte sur une cassette avec un seul point d'entrée mais on peut envisager une cassette avec deux points d'entrées à condition que les portions de ruban s'enroulent dans le même sens.

Par ailleurs, le mode de réalisation divulgue une cassette pour ruban de fibres optiques mais l'invention peut être utilisée pour ranger des fibres optiques simples munies de protections d'épissures.

De plus, la cassette a été décrite avec une forme circulaire mais toute autre forme peut être envisagée.

En outre, il est possible de ranger plusieurs protections d'épissure en superposant les rubans.

Enfin, on pourra remplacer tout moyen par un moyen équivalent sans sortir du cadre de l'invention.

## Revendications

1. Cassette (1) de lovage d'au moins une fibre optique (2) munie d'une protection d'épissure (3), dans laquelle ladite fibre optique (2) est destinée à être enroulée de manière à épouser une paroi périphérique intérieure (7) de ladite cassette (1), ladite cassette (1) étant munie de deux entrées (10) au voisinage de ladite paroi périphérique intérieure (7) pour faire pénétrer dans ladite cassette (1) deux portions (4, 5) de ladite fibre optique (2) situées de part et d'autre de ladite protection d'épissure (3) **caractérisée en ce que** lesdites entrées (10) sont munies de moyens de guidage (18) de sorte que lesdites deux portions (4, 5) s'enroulent dans le même sens et que ladite protection d'épissure (3) vient se placer à une position non prédéterminée de ladite cassette (1).

2. Cassette (1) selon la revendication 1 **caractérisée en ce que** lesdites deux entrées (10) sont confondues.

3. Cassette (1) selon la revendication 2 destinée à être montée dans un organiseur (17) pour cassettes superposables, ladite cassette (1) comportant un bras flexible (6) de pivotement entre une position fermée et une position ouverte relativement au dit organiseur (17), ledit bras (6) permettant l'acheminement de ladite fibre (2) entre l'organiseur (17) et ladite entrée (10) de ladite cassette (1), le chemin en longueur de guidage de ladite fibre (2) de l'une à l'autre desdites positions fermée et ouverte restant constant.

4. Cassette selon l'une des revendications précédentes destinée à contenir une fibre (2) présentant une inversion de sens lui donnant la forme d'un S (21) **caractérisée en ce que** ladite cassette (1) comporte des moyens de blocage (9) de ladite fibre (2) de manière à maintenir la forme en S (21)

5. Cassette (1) selon la revendication 4 **caractérisée en ce que** lesdits moyens de blocage (9) sont au centre de ladite cassette (1).

6. Cassette (1) selon l'une des revendications précédentes **caractérisée en ce qu'**elle comporte des moyens de maintien (8) de ladite fibre (2), lesdits moyens de maintien (8) étant disposés à proximité de ladite paroi périphérique intérieure (7) de façon à limiter le mouvement en translation de ladite fibre (2) parallèlement à ladite paroi périphérique intérieure (7).

7. Cassette (1) selon l'une des revendications précédentes **caractérisée en ce que** ladite paroi périphérique intérieure (7) est de forme sensiblement circulaire.

8. Cassette (1) selon l'une des revendications précédentes déstinée à être utilisée avec une fibre (2) telle que lesdites deux portions (4, 5) de fibre ont des longueurs suffisamment différentes à partir de leurs points d'entrée (10) dans ladite cassette (1) pour que la protection d'épissure (3) ne soit pas au centre de ladite cassette (1).

9. Cassette (1) selon la revendications 7 destinée à être utilisée avec une fibre (2) telle que lesdites deux portions (4, 5) de fibre ont une différence de longueur à partir de leurs points d'entrée (10) au moins égale à πxD/2 où D désigne le diamètre de ladite paroi périphérique (7).
